# FASCICULE DE BREVET EUROPEEN

(11) **EP 4 008 597 B1**
(45) Date de publication et mention de la délivrance du brevet: **06.09.2023**
(21) Numéro de dépôt: 21211638.8
(22) Date de dépôt: 01.12.2021
(51) Int. Cl.: B61D 17/02

(54) **VOITURE POUR VÉHICULE FERROVIAIRE AVEC ÉLÉMENT AÉRODYNAMIQUE DE STABILISATION**
WAGEN FÜR SCHIENENFAHRZEUG MIT AERODYNAMISCHEM STABILISIERUNGSELEMENT
CAR FOR RAILWAY VEHICLE WITH AERODYNAMIC STABILISING ELEMENT

(30) Priorité: 02.12.2020 FR 2012543
(43) Date de publication de la demande: 08.06.2022
(73) Titulaire: SpeedInnov, 75008 Paris (FR)
(72) Inventeur: DEMILLY, Charles, 60500 CHANTILLY (FR)
(74) Mandataire: Lavoix

(56) Documents cités:
- EP-A1- 0 024 554
- CN-B- 103 085 783
- CN-B- 106 476 825
- JP-A- 2007 118 750
- KR-A- 20130 027 676

## Description

La présente invention concerne une voiture pour véhicule ferroviaire, du type comportant : une caisse, ladite caisse comprenant une première et une seconde faces latérales, chacune desdites faces latérales s'étendant selon une direction longitudinale horizontale, correspondant à une direction de déplacement du véhicule ; et un élément aérodynamique de stabilisation au vent latéral.

Les véhicules ferroviaires, notamment à grande vitesse, sont sensibles aux vents latéraux. Ces derniers induisent notamment un déséquilibre de pression de part et d'autre du véhicule, associé à un couple de roulis qui tend à faire basculer le véhicule sur un côté.

Il est connu, notamment du document JP2007118750A et du document GB1564970, de munir les véhicules ferroviaires d'éléments de stabilisation au vent latéral, afin de limiter le couple de roulis.

La présente invention a pour but d'améliorer les dispositifs existants. A cet effet, l'invention a pour objet une voiture pour véhicule ferroviaire présentant les caractéristiques techniques de la revendication 1.

Suivant d'autres aspects avantageux de l'invention, la voiture pour véhicule ferroviaire comporte l'une ou plusieurs des caractéristiques suivantes, prises isolément ou suivant toutes les combinaisons techniquement possibles :
- la caisse présente une longueur selon la direction longitudinale ; et le premier aileron s'étend sur au moins 50%, préférentiellement sur au moins 80%, de ladite longueur de la caisse ;
- la voiture comprend une pluralité de roues de déplacement du véhicule, lesdites roues étant mobiles en rotation par rapport à la partie basse de la caisse ; le premier aileron est disposé au-dessous d'une hauteur maximale des roues par rapport à la caisse, ladite hauteur maximale étant définie par une extrémité supérieure desdites roues ;
- l'élément aérodynamique de stabilisation comporte un deuxième aileron s'étendant en partie basse de la caisse le long de la seconde face latérale, dans la direction longitudinale ;
- les premier et deuxième ailerons sont disposés de manière sensiblement symétrique par rapport à un plan médian de la caisse, ledit plan étant disposé dans la direction longitudinale.

L'invention se rapporte en outre à un véhicule ferroviaire comprenant une voiture telle que décrite ci-dessus.

L'invention sera mieux comprise à la lecture de la description qui va suivre, donnée uniquement à titre d'exemple non limitatif et faite en se référant aux dessins sur lesquels :
- la figure 1 est une vue schématique latérale d'une voiture pour véhicule ferroviaire selon un mode de réalisation de l'invention ;
- la figure 2 est une vue de détail schématique d'une section de la voiture de la figure 1 ; et
- la figure 3 est une représentation schématique des phénomènes de pression subis par la voiture des figures 1 et 2.

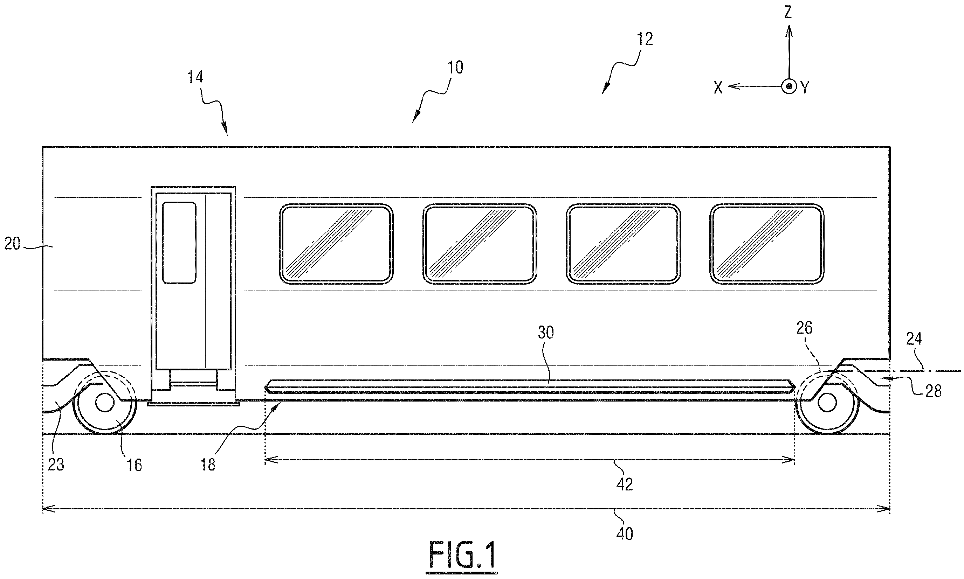

Les figures 1 à 3 représente schématiquement une voiture 10 selon un mode de réalisation de l'invention. La voiture 10 fait partie d'un véhicule ferroviaire 12, ledit véhicule comprenant par exemple plusieurs voitures analogues à la voiture 10, lesdites voitures étant reliées entre elles.

La voiture 10 comprend : une caisse 14 ; des roues 16 ; et au moins un élément aérodynamique 18 de stabilisation.

On considère une base orthonormée (X, Y, Z) associée à la caisse 14. La direction Z représente la verticale. La direction X, ou direction longitudinale, correspond à une direction de déplacement de la voiture 10. Ladite direction de déplacement est considérée comme horizontale. La direction Y, ou direction transversale, correspond à une direction horizontale perpendiculaire à la direction de déplacement du véhicule.

La caisse comprend une première 20 et une seconde 21 faces latérales, chacune desdites faces latérales s'étendant selon la direction longitudinale X. Dans la suite de la description, on considère que les première 20 et seconde 21 faces latérales sont sensiblement symétriques par rapport à un plan (X, Z) formant un plan médian 22 de la voiture 10.

Chaque roue 16 de la voiture est mobile en rotation par rapport à la caisse 14, selon un axe de rotation s'étendant selon la direction Y, ou direction transversale. De manière connue, la voiture 10 comporte au moins quatre roues, disposées à l'avant et à l'arrière de la caisse 14 selon un sens de déplacement de la voiture 10. Les roues 16 sont par exemple reliées à la caisse 14 par l'intermédiaire de bogies 23.

Les roues 16 sont disposées en partie basse de la caisse 14. On considère une hauteur maximale 24 selon Z, atteinte par une extrémité supérieure 26 desdites roues. De préférence, on considère comme partie basse 28 de la caisse une partie de la caisse située au-dessous de ladite hauteur maximale 24.

L'élément aérodynamique 18 de stabilisation est solidaire de la caisse 14, préférentiellement de la partie basse 28 de ladite caisse.

L'élément aérodynamique 18 comprend au moins un premier aileron 30, s'étendant le long de la première face latérale 20, dans la direction longitudinale X. De préférence, ledit premier aileron 30 est situé au-dessous de la hauteur maximale 24 des roues 16.

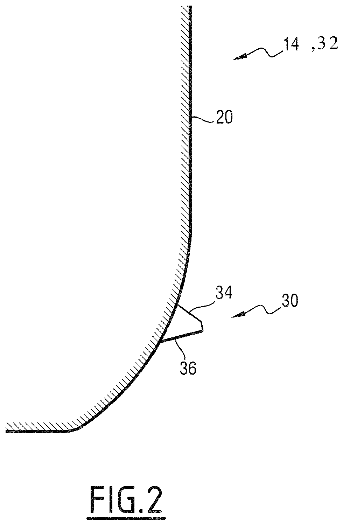

Comme visible sur la figure 2, le premier aileron 30 forme une saillie selon Y par rapport à un profil 32 de la partie basse 28 de la caisse.

Dans le mode de réalisation représenté, le premier aileron 30 comporte une face supérieure 34 et une face inférieure 36, chacune desdites faces formant des angles obtus avec le profil 32. De tels angles permettent de limiter l'effet du premier aileron 30 sur la traînée de déplacement de la voiture 10. Le premier aileron 30 présente ainsi une section sensiblement trapézoïdale, les faces supérieure 34 et inférieure 36 étant inclinées par rapport à l'horizontale.

En variante non représentée, la face supérieure et/ou la face inférieure est horizontale. Le premier aileron peut notamment présenter une section sensiblement rectangulaire, les faces supérieure et inférieure étant parallèles.

La caisse 14 présente une première longueur 40 selon la direction longitudinale X. Le premier aileron 30 s'étend sur une deuxième longueur 42 selon X. De préférence, la deuxième longueur 42 est égale à au moins 50%, préférentiellement à au moins 80%, de ladite première longueur 40.

De préférence, l'élément aérodynamique 18 comprend en outre un deuxième aileron 44, s'étendant selon X le long de la seconde face latérale 21. Plus préférentiellement, ledit deuxième aileron 44 est situé au-dessous de la hauteur maximale 24 des roues 16.

De préférence, les premier 30 et deuxième 44 ailerons sont disposés et configurés de manière sensiblement symétrique par rapport au plan médian 22 de la caisse 14.

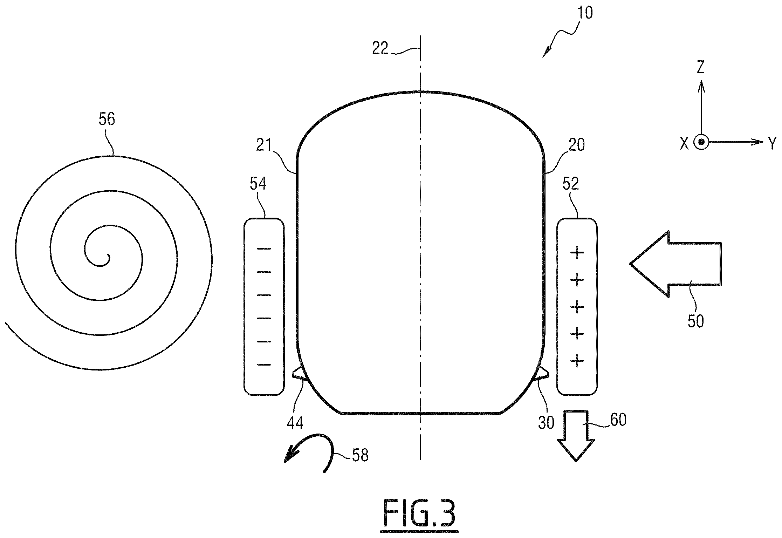

Un procédé de fonctionnement de la voiture 10 et du véhicule 12 va à présent être décrit à l'appui de la figure 3. On considère que le véhicule 12 se déplace dans la direction X, par exemple sur une voie ferrée. En particulier, on considère que le véhicule 12 se déplace à grande vitesse, par exemple à une vitesse supérieure à 250 km/h.

Par ailleurs, on considère que le véhicule 12 est soumis à un vent latéral 50, soufflant dans la direction transversale Y en direction de la première face latérale 20.

Le sillage du véhicule 12 crée une surpression 52 du côté de la première face latérale 20 et une première dépression 54 du côté de la seconde face latérale 21.

En outre, une deuxième dépression, sous la forme d'un vortex 56, se forme à une certaine distance du véhicule 12 du côté de la seconde face latérale 21.

Il en résulte un moment de renversement 58, qui tend à faire basculer le véhicule 12 autour d'un axe parallèle à X.

Un effet du premier aileron 30 est d'augmenter la surpression 52 au niveau du bas de la caisse 14, de sorte à générer un effort 60 dirigé vers le bas, qui plaque au sol le véhicule 12.

Un effet du deuxième aileron 44 est de modifier une trajectoire de l'air passant sous la caisse 14, en éloignant cette trajectoire de la seconde face latérale 21. Le vortex 56 est ainsi écarté selon Y du véhicule 12, ce qui diminue son impact sur la dépression totale du côté de la seconde face latérale 21.

Les deux effets cumulés des premier 30 et deuxième 44 ailerons permettent ainsi de réduire le moment de renversement 58.

La longueur 42 des ailerons 30, 44 permet de maximiser l'effort 60 tout en limitant les dimensions desdits ailerons selon Y, de sorte à limiter la traînée résultante.

La géométrie d'une voiture 10 selon l'invention permet notamment une réduction du moment de renversement 58 de l'ordre de 5%, par rapport à une géométrie similaire dépourvue d'ailerons 30, 44.

## Revendications

1. Voiture (10) pour véhicule ferroviaire (12), comprenant : une caisse (14), ladite caisse comprenant une première (20) et une seconde (21) faces latérales, chacune desdites faces latérales s'étendant selon une direction longitudinale (X) horizontale, correspondant à une direction de déplacement du véhicule ; des roues (16) reliées à la caisse, une extrémité supérieure (26) desdites roues atteignant une hauteur maximale (24) ; et un élément aérodynamique (18) de stabilisation au vent latéral,
ledit élément aérodynamique de stabilisation comportant au moins un premier aileron (30) s'étendant en partie basse de la caisse le long de la première face latérale, dans la direction longitudinale, la partie basse étant considérée comme située au-dessous de la hauteur maximale (24) des roues ;
le premier aileron (30) formant une saillie par rapport à un profil (32) de la partie basse (28) de la caisse, ledit premier aileron comportant une face supérieure (34) et une face inférieure (36), la voiture étant **caractérisée en ce que** chacune desdites faces forme un angle obtus avec le profil (32).

2. Voiture selon la revendication 1, dans laquelle : la caisse (14) présente une longueur (40) selon la direction longitudinale ; et le premier aileron s'étend (42) sur au moins 50%, préférentiellement sur au moins 80%, de ladite longueur de la caisse.

3. Voiture selon la revendication 1 ou la revendication 2, dans laquelle la voiture comprend une pluralité de roues (16) de déplacement du véhicule, lesdites roues étant mobiles en rotation par rapport à la partie basse (28) de la caisse ; et le premier aileron (30) est disposé au-dessous d'une hauteur maximale (24) des roues (16) par rapport à la caisse, ladite hauteur maximale étant définie par une extrémité supérieure (26) desdites roues.

4. Voiture selon l'une des revendications précédentes, dans laquelle l'élément aérodynamique (18) de stabilisation comporte un deuxième aileron (44) s'étendant en partie basse de la caisse le long de la seconde face latérale, dans la direction longitudinale.

5. Voiture selon la revendication 4, dans laquelle les premier (30) et deuxième (44) ailerons sont disposés de manière sensiblement symétrique par rapport à un plan médian (22) de la caisse, ledit plan étant disposé dans la direction longitudinale.

6. Véhicule ferroviaire (12) comprenant une voiture (10) selon l'une des revendications précédentes.

## Patentansprüche

1. Wagen (10) für Schienenfahrzeug (12), umfassend: einen Wagenkasten (14), der Wagenkasten umfassend eine erste (20) und eine zweite (21) Seitenfläche, wobei sich jede der Seitenflächen in einer horizontalen Längsrichtung (X) erstreckt, die einer Fahrtrichtung des Fahrzeugs entspricht; Räder (16), die mit dem Wagenkasten verbunden sind, wobei ein oberes Ende (26) der Räder eine maximale Höhe (24) erreicht; und ein aerodynamisches Element (18) zur Stabilisierung in Seitenwind,
dieses Stabilisierungselement umfassend mindestens einen ersten Spoiler (30), der sich in einem unteren Teil des Wagenkastens entlang der ersten Seitenfläche in Längsrichtung erstreckt, wobei der untere Teil als unterhalb der maximalen Höhe (24) der Räder betrachtet wird;
wobei der erste Spoiler (30) in Bezug auf ein Profil (32) des unteren Teils (28) des Wagenkastens einen Vorsprung bildet, der erste Spoiler umfassend eine obere Seite (34) und eine untere Seite (36), wobei das Fahrzeug **dadurch gekennzeichnet ist, dass** jede dieser Flächen einen stumpfen Winkel mit dem Profil (32) bildet.

2. Fahrzeug nach Anspruch 1, wobei: der Wagenkasten (14) eine Länge (40) in Längsrichtung aufweist und sich der erste Spoiler auf mindestens 50 %, vorzugsweise mindestens 80 % der Länge des Wagenkastens erstreckt (42).

3. Fahrzeug nach Anspruch 1 oder 2, wobei das Fahrzeug eine Vielzahl von Rädern (16) zum Bewegen des Fahrzeugs umfasst, wobei die Räder in Bezug auf den unteren Teil (28) des Wagenkastens drehbar sind; und der erste Spoiler (30) unterhalb einer maximalen Höhe (24) der Räder (16) in Bezug auf den Wagenkasten angeordnet ist, wobei die maximale Höhe durch ein oberes Ende (26) der Räder definiert ist.

4. Fahrzeug gemäß einer der vorherigen Ansprüche, wobei das Stabilisierungselement (18) einen zweiten Spoiler (44) umfasst, der sich auf dem unteren Teil des Wagenkastens entlang der zweiten Seitenfläche in Längsrichtung erstreckt.

5. Fahrzeug gemäß Nr. 4, wobei der erste (30) und der zweite (44) Spoiler im Verhältnis zu einer mittleren Ebene (22) des Wagenkastens im Wesentlichen symmetrisch angeordnet sind, wobei diese Ebene in Längsrichtung angeordnet ist.

6. Schienenfahrzeug (12), umfassend ein Fahrzeug (10) nach einem der vorherigen Ansprüche.

## Claims

1. Carriage (10) for a rail vehicle (12), comprising : a body (14), said body comprising a first (20) and a second (21) lateral face, each of said lateral faces extending in a horizontal longitudinal direction (X), corresponding to a direction of vehicle movement; wheels (16) connected to the body, an upper end (26) of said wheels reaching a maximum height (24); and an aerodynamic element (18) for stabilisation against side wind,
the said aerodynamic stabilising element comprising at least a first spoiler (30) extending at the bottom of the body along the first lateral face, in the longitudinal direction, the bottom being considered to be situated below the maximum height (24) of the wheels;
the first spoiler (30) forming a projection with respect to a profile (32) of the lower part (28) of the body, said first spoiler comprising an upper face (34) and a lower face (36), the car being **characterised in that** each of said faces forms an obtuse angle with the profile (32).

2. Carriage according to claim 1, in which: the body (14) has a length (40) in the longitudinal direction; and the first spoiler extends (42) over at least 50%, preferably over at least 80%, of the said length of the body.

3. Carriage according to claim 1 or claim 2, wherein the car comprises a plurality of wheels (16) for moving the vehicle, said wheels being rotatable relative to the lower part (28) of the body ; and the first spoiler (30) is disposed below a maximum height (24) of the wheels (16) relative to the body, said maximum height being defined by an upper end (26) of said wheels.

4. Carriage according to one of the preceding claims, in which the aerodynamic stabilising element (18) comprises a second spoiler (44) extending at the lower part of the body along the second lateral face, in the longitudinal direction.

5. Carriage according to claim 4, in which the first (30) and second (44) fins are arranged substantially symmetrically with respect to a median plane (22) of the body, said plane being arranged in the longitudinal direction.

6. A railway vehicle (12) comprising a carriage (10) according to any of the preceding claims.
